# FASCICULE DE BREVET EUROPEEN

(11) **EP 3 395 042 B1**
(45) Date de publication et mention de la délivrance du brevet: **25.03.2020**
(21) Numéro de dépôt: 16829417.1
(22) Date de dépôt: 21.12.2016
(51) Int. Cl.: H04L 29/06, G06Q 20/40

(54) **SERVEUR D'AUTHENTIFICATION POUR LE CONTRÔLE D'ACCÈS A UN SERVICE**
AUTHENTIFIZIERUNGSSERVER ZUR STEUERUNG DES ZUGANGS AUF EINEN DIENST
AUTHENTICATION SERVER FOR CONTROLLING ACCESS TO A SERVICE

(30) Priorité: 21.12.2015 FR 1562946
(43) Date de publication de la demande: 31.10.2018
(73) Titulaire: IDEMIA France, 92400 Courbevoie (FR)
(72) Inventeur: GIRODON, Stéphane, 92700 Colombes (FR)
(74) Mandataire: Cabinet Beau de Loménie
(86) Numéro de dépôt international: PCT/FR2016/053614
(87) Numéro de publication internationale: WO 2017/109413

(56) Documents cités:
- EP-A1- 1 978 479
- US-A1- 2011 184 867
- US-A1- 2013 304 648
- Oberthur: "dCVV CARD", , 15 septembre 2014 (2014-09-15), XP055198367, Extrait de l'Internet: URL:http://www.oberthur.com/ot/OT_dCVV.pdf [extrait le 2015-06-25]

## Description

### Arrière-plan de l'invention

La présente invention se situe dans le domaine des mécanismes d'authentification et porte plus particulièrement sur une authentification pour contrôler l'accès à un service.

L'invention peut en particulier être utilisée pour contrôler l'accès d'un utilisateur à un service en ligne accessible via un réseau de télécommunications, tel qu'Internet par exemple.

Il est connu dans le domaine des services en ligne de contrôler l'accès d'un utilisateur à un tel service au moyen d'un mécanisme d'authentification approprié. En général, l'authentification à un service en ligne, tel qu'un service marchand sur Internet par exemple, nécessite la saisie par l'utilisateur d'un identifiant et d'un mot de passe. L'accès au service n'est autorisé que si l'authentification est passée avec succès.

Cependant, les mécanismes d'authentification actuels ne permettent pas de contrôler de façon optimale l'accès à un service en ligne. Un risque existe notamment en ce qu'il est possible pour une personne malveillante de subtiliser l'identifiant et le mot de passe d'un utilisateur qui a souscrit à un service afin d'accéder de façon non autorisée au service en question.

Le document de Publication de Demande de Brevet US 2013/0304648 A1 par O'Connell et al. expose un système d'accès sécurisé employant une carte à puce associée à un système de paiement bancaire.

Un besoin existe aujourd'hui pour une solution permettant un contrôle efficace et flexible de l'accès d'un utilisateur à un service en ligne accessible via un réseau de télécommunications tel qu'Internet par exemple.

### Objet et résumé de l'invention / Résumé

A cet effet, la présente invention concerne un serveur d'authentification comprenant:
- un module de communication apte à transmettre, à un serveur distant, un identifiant bancaire de type PAN associé à une carte bancaire, ledit module de communication étant apte, en réponse audit identifiant PAN transmis, à recevoir du serveur distant un premier code d'accès pour accéder à un service;
- un module d'enregistrement apte à enregistrer, dans une mémoire, un identifiant bancaire PAN de la carte bancaire, en association avec une date d'expiration de la carte bancaire et le premier code d'accès à un service ;
- le module de communication étant apte à recevoir une requête d'authentification provenant d'un serveur d'accès contrôlant l'accès audit service, ladite requête comprenant un deuxième code d'accès et un premier code dynamique de sécurité généré par la carte bancaire ;
   le serveur d'authentification comprenant en outre:
- un module de vérification configuré pour générer un deuxième code dynamique de sécurité à partir de l'identifiant bancaire PAN et de la date d'expiration enregistrés dans ladite mémoire, pour comparer les premier et deuxième codes dynamiques de sécurité, et pour détecter que le premier code dynamique de sécurité est valide seulement s'il coïncide avec le deuxième code dynamique de sécurité ; et
- ledit module de communication étant configuré pour envoyer au serveur d'accès un message d'authentification positive seulement si :
   ∘ le deuxième code d'accès coïncide avec le premier code d'accès enregistré ; et
   ∘ le premier code dynamique de sécurité est valide.

L'invention permet avantageusement de sécuriser l'accès d'un utilisateur à un service, tel qu'un service web par exemple. L'invention permet l'attribution d'un code d'accès à un utilisateur et le stockage, dans une base de données, du code d'accès en association avec un identifiant PAN associé à la carte à puce DCW de l'utilisateur et la date d'expiration de ladite carte. L'utilisateur peut ainsi accéder ultérieurement à un service, ou réaliser une transaction, en fournissant son code d'accès et un code dynamique de sécurité généré par sa carte à puce DCVV. Contrairement aux techniques conventionnelles, l'utilisateur n'a pas besoin de fournir son numéro de compte bancaire PAN ou la date EXP d'expiration de sa carte bancaire lorsqu'il accès au service en question. Un code d'accès lui est fourni à cette fin par l'entité compétente (sa banque par exemple). Il est ainsi possible de limiter la diffusion du numéro de compte bancaire PAN et de la date EXP d'expiration de la carte bancaire, ces données sensibles étant susceptibles d'être dérobées.

L'invention peut offrir une authentification renforcée en faisant intervenir un code d'accès statique attribué par une entité compétente à l'utilisateur, ainsi qu'un code dynamique (le code DCW) qui varie dans le temps.

De plus, un code d'accès spécifique peut être attribué à l'utilisateur pour chaque service parmi une pluralité de service. Il est ainsi possible d'offrir un contrôle flexible et sécurisé de l'accès d'un utilisateur à une pluralité de services.

Selon un mode de réalisation particulier, le premier code dynamique de sécurité reçu par le module de communication dans la requête d'authentification est généré par la carte bancaire en exécutant une fonction cryptographique à partir de l'identifiant bancaire PAN et de la date d'expiration, et à partir d'une donnée temporelle ou d'un compteur du nombre de premiers codes dynamiques de sécurité.

Selon un mode de réalisation particulier, le module de vérification est configuré pour générer le deuxième code dynamique de sécurité en exécutant la fonction cryptographique à partir dudit identifiant bancaire PAN et de la date d'expiration enregistrés dans ladite mémoire et à partir d'une donnée temporelle ou d'un compteur du nombre de deuxième code dynamique de sécurité.

Selon un mode de réalisation particulier, le module de communication est apte à recevoir, dans des données de transaction bancaire, l'identifiant PAN à transmettre audit serveur distant.

Selon un mode de réalisation particulier, le module de communication est apte à recevoir les données de transaction bancaire depuis le serveur d'accès.

Selon un mode de réalisation particulier, le serveur d'authentification est tel que :
- les données de transaction bancaires comportent un troisième code dynamique de sécurité généré par ledit dispositif, l'identifiant bancaire PAN et la date d'expiration ;
- le module de vérification est apte à vérifier la validité du troisième code dynamique de sécurité ;
- ledit module de communication étant configuré pour transmettre au serveur distant, seulement si la vérification de validité du troisième code dynamique de sécurité est passée avec succès, l'identifiant PAN et un message indiquant que ledit troisième code dynamique de sécurité est valide ; et
- ledit module de communication étant apte à recevoir du serveur distant, en réponse à l'identifiant PAN et audit message transmis, ledit premier code d'accès à enregistrer par le module d'enregistrement.

Selon un mode de réalisation particulier, le serveur d'authentification est tel que :
- le troisième code dynamique de sécurité est généré par la carte bancaire à partir de l'identifiant PAN et de la date d'expiration de la carte bancaire, et à partir d'une donnée temporelle ou du compteur du nombre de premiers codes dynamiques de sécurité ;
- le module de vérification est configuré pour générer un quatrième code dynamique de sécurité à partir de l'identifiant PAN et de la date d'expiration de la carte bancaire, et à partir d'une donnée temporelle ou du compteur du nombre de deuxièmes codes dynamiques de sécurité, pour comparer les troisième et quatrième codes dynamiques de sécurité, et pour détecter que le troisième code dynamique de sécurité est valide seulement si ledit troisième code dynamique de sécurité coïncide avec le quatrième code dynamique de sécurité.

Selon un mode de réalisation particulier, le module d'enregistrement est configuré pour enregistrer un identifiant du service en association avec l'identifiant PAN, la date d'expiration et le premier code d'accès de sorte que le module de vérification soit apte à déterminer le premier code d'accès associé audit service.

Selon un mode de réalisation particulier, le module d'enregistrement est configuré pour enregistrer le premier code d'accès dans ladite mémoire en association avec une pluralité de services.

Selon un mode de réalisation particulier, le serveur d'authentification est tel que :
- le module d'enregistrement est configuré pour enregistrer une condition temporelle en association avec l'identifiant PAN, la date d'expiration et le premier code d'accès,
- le module de vérification étant configuré pour déterminer que le premier code d'accès est valide tant que la condition temporelle est satisfaite.

Selon un mode de réalisation particulier, le module de communication est configuré pour envoyer au serveur d'accès un message d'authentification négative, si le deuxième code d'accès ne coïncide pas avec le premier code d'accès enregistré ou si le premier code dynamique de sécurité n'est pas valide.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

L'invention concerne également un système de contrôle d'accès à un service comprenant :
- un serveur d'authentification tel que défini ci-avant ; et
- un serveur d'accès apte à contrôler l'accès audit service, ledit serveur d'accès étant configuré pour autoriser l'accès audit service à un utilisateur associé audit identifiant bancaire PAN, uniquement sur réception du message d'authentification positive du serveur d'authentification.

Corrélativement, l'invention concerne un procédé d'authentification mise en œuvre par un serveur d'authentification, comprenant:
- transmission, à un serveur distant, d'un identifiant bancaire PAN associé à une carte bancaire;
- réception, en réponse à ladite transmission, d'un premier code d'accès pour accéder à un service ;
- enregistrement de l'identifiant PAN en association avec le premier code d'accès ;
- réception d'une requête d'authentification provenant d'un serveur d'accès contrôlant l'accès audit service, ladite requête comprenant un deuxième code d'accès et un premier code dynamique de sécurité généré par la carte bancaire en exécutant une fonction cryptographique à partir d'une donnée temporelle ;
- vérification de la validité du premier code dynamique de sécurité, ladite vérification comprenant la génération d'un deuxième code dynamique de sécurité en exécutant ladite fonction cryptographique à partir d'une donnée temporelle et à partir dudit identifiant PAN enregistré, la comparaison des premier et deuxième codes dynamiques de sécurité, et la détection que le premier code dynamique de sécurité est valide seulement s'il coïncide avec le deuxième code dynamique de sécurité ; et
- envoi (C42) au serveur d'accès d'un message d'authentification positive seulement si :
   ∘ le deuxième code d'accès coïncide avec le premier code d'accès enregistré ; et
   ∘ le premier code dynamique de sécurité est valide.

On notera que les différents modes de réalisation mentionnés ci-avant en relation avec le serveur d'authentification de l'invention ainsi que les avantages associés s'appliquent de façon analogue au procédé d'authentification de l'invention.

Dans un mode particulier de réalisation, les différentes étapes du procédé d'authentification sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un serveur d'authentification ou plus généralement dans un ordinateur, ce programme comportant des instructions adaptées à la mise en œuvre des étapes d'un procédé d'authentification tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement une carte à puce conforme à un mode de réalisation particulier de l'invention ;
- la figure 2 représente schématiquement la structure d'un système de contrôle d'accès comprenant un serveur d'accès et un serveur d'authentification conformes à un mode de réalisation particulier de l'invention ;
- la figure 3 représente schématiquement la structure d'un serveur d'authentification conforme à un mode de réalisation particulier de l'invention ; et
- la figure 4 représente, sous forme d'un organigramme, les étapes d'un procédé d'authentification selon un mode de réalisation particulier de l'invention.

### Description détaillée de plusieurs modes de réalisation

Comme indiqué précédemment, la technique proposée se rapporte au domaine des mécanismes d'authentification et porte plus particulièrement sur une authentification pour contrôler l'accès à un service.

L'invention propose un mécanisme d'authentification pour contrôler l'accès à un service en ligne, ce mécanisme faisant intervenir un dispositif électronique (tel qu'une carte à puce par exemple) apte à générer un code de sécurité dynamique.

On connaît par exemple dans le domaine des transactions bancaires, des cartes à puce (dites cartes bancaires) associées à des comptes bancaires. Les opérations et transactions en ligne effectuées au moyen d'une telle carte bancaire sont sécurisées en utilisant un code de sécurité associé à la carte. En général, ces codes de sécurité sont dit statiques, ce qui signifie qu'ils sont constants dans le temps, autrement dit que leur valeur reste identique pendant toute la durée de vie de la carte.

Plus récemment, une méthode pour sécuriser des transactions à distance (en ligne ou par téléphone par exemple) consiste à utiliser une carte bancaire apte à générer - et à afficher sur un écran de la carte - un code dynamique de sécurité, c'est-à-dire un code de sécurité qui change au cours de la vie de la carte. Le système de traitement informatique du service financier de transactions en ligne est apte à vérifier la validité de ce code dynamique de sécurité, en fonction par exemple d'un paramètre temporel, pour valider ou non la transaction. L'utilisation d'un tel code dynamique de sécurité permet de s'assurer que l'utilisateur a en sa possession la carte bancaire au moment de la transaction. S'il est dérobé, le code dynamique de sécurité a une utilité limitée dans la mesure où la validité de ce code n'est que temporaire.

Un code dynamique de sécurité est désigné sous l'appellation DCVV pour « *Dynamic Card Vérification Value* ». Dans le présent exposé, on appellera carte à puce DCW une carte à puce apte à générer de tels codes dynamiques de sécurité.

Les cartes à puce de type DCW sont initialement conçues pour sécuriser une transaction en ligne, par exemple une transaction financière telle qu'un paiement, une consultation bancaire etc.. La présente invention propose d'utiliser une carte à puce DCW pour contrôler l'accès à un service avec un niveau de sécurisation renforcé.

Dans le présent exposé, des exemples de mise en œuvre de l'invention sont décrits dans le cadre de l'authentification d'un utilisateur pour accéder à un service en ligne accessible via Internet. On comprendra cependant que l'invention s'applique plus généralement à une authentification pour accéder à un quelconque service accessible par un réseau de télécommunications approprié (Intranet, téléphone...).

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

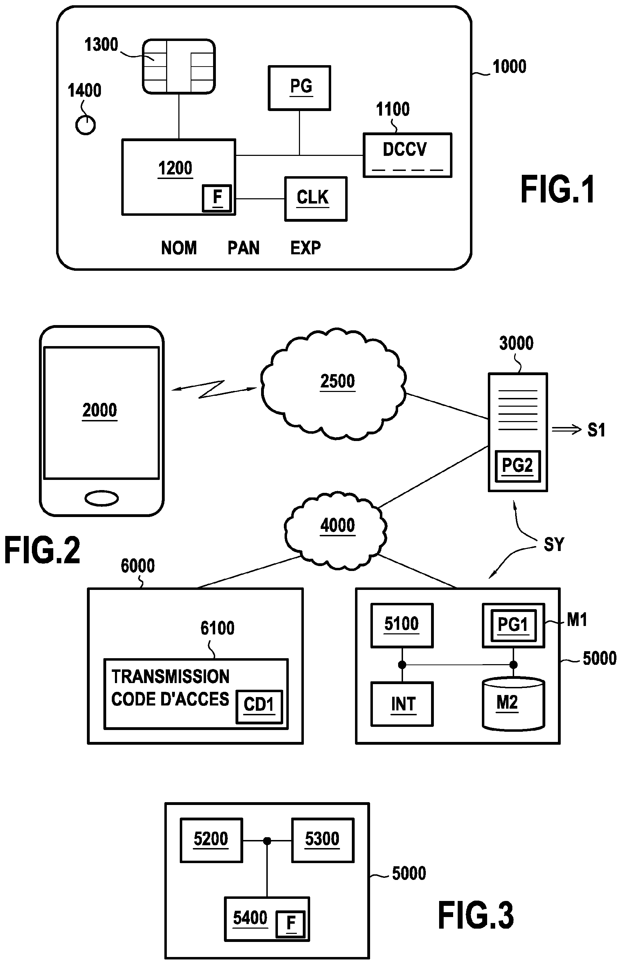

La **figure 1** représente un dispositif électronique 1000 selon un exemple particulier permettant d'effectuer des transactions en ligne. Comme indiqué par la suite, ce dispositif électronique est apte à générer un code dynamique de sécurité DCVV.

Dans les modes de réalisation décrits ci-après, le dispositif 1000 est une carte à puce (en anglais smartcard), par exemple une carte bancaire. D'autres mises en œuvre d'un tel dispositif 1000 sont toutefois possibles. En variante, le dispositif 1000 peut par exemple être constitué par un terminal, par exemple de téléphonie mobile, mettant en œuvre une application permettant de réaliser des transactions.

Dans le mode de réalisation décrit ici, la carte à puce 1000 est par exemple conforme à la norme ISO 7816. Elle comporte en particulier une interface à contacts 1300. La carte à puce 1000 est par exemple au format ID-1 (dimensions : 85,60 x53,98 mm) et d'épaisseur 0.76 mm environ. Son corps de carte est par exemple en matière plastique.

Toujours dans cet exemple, le nom NOM du titulaire de la carte à puce, un numéro de compte bancaire PAN (pour « *Primary Account Number »,* de 16 chiffres par exemple) et une date d'expiration EXP peuvent être imprimés et/ou embossés sur la carte à puce 1000.

Cette carte à puce 1000 comporte dans cet exemple un contrôleur 1200 comportant un module apte à fournir la date courante, par exemple une horloge CLK, ce contrôleur 1200 étant apte à calculer un code dynamique de sécurité DCCV en appliquant une fonction cryptographique F à des paramètres d'entrée comportant le numéro de compte bancaire PAN, un paramètre temporel et la date EXP d'expiration de la carte à puce 1000. Comme indiqué par la suite, on peut envisager d'autres manières de calculer un code dynamique de sécurité.

Le paramètre temporel mentionné ci-dessus représente par exemple un point dans le temps (période de temps, date et/ou heure par exemple) où la carte à puce 1000 génère un code dynamique de sécurité DCCV1 donné. La génération d'un code dynamique de sécurité est connue en soit et ne sera donc pas décrit plus en détail dans le présent exposé.

Dans le mode de réalisation décrit ici, le code dynamique de sécurité DCCV1 généré par la carte à puce 1000 est par exemple varié de façon périodique, selon une période prédéterminée.

La carte à puce 1000 comporte en outre ici un écran 1100 d'affichage apte à afficher le code dynamique de sécurité DCCV1. Cet écran peut comporter par exemple 3 ou 4 zones élémentaires selon la taille de ce code dynamique.

Dans le mode de réalisation décrit ici, la carte à puce 1000 peut comporter également une batterie non représentée et un bouton poussoir 1400 pour allumer ou éteindre l'écran d'affichage 1100 et ainsi contrôler l'affichage du code dynamique de sécurité DCCV1. Ce bouton-poussoir ou tout moyen équivalent (bouton capacitif, ...) pour allumer ou éteindre l'écran 1100 est optionnel. L'écran d'affichage 1100 peut se trouver sur la face de la carte à puce 1000 opposée à celle où sont imprimés et/ou embossés le numéro de carte bancaire PAN et la date d'expiration EXP. En variante, ils sont sur la même face.

On comprendra que le dispositif 1000 représenté en **figure 1** n'est qu'un exemple de réalisation, d'autres mises en œuvre étant possibles dans le cadre de l'invention. L'homme du métier comprendra en particulier que certains éléments du dispositif 1000 ne sont décrits ici que pour faciliter la compréhension de l'invention, ces éléments n'étant pas nécessaires pour mettre en œuvre l'invention.

La **figure 2** représente schématiquement un terminal utilisateur 2000, un serveur d'accès 3000, un serveur d'authentification 5000 et un serveur distant 6000, conformément à un mode de réalisation particulier de l'invention. Le serveur d'accès 3000 et le serveur d'authentification 5000 forment ensemble un système de contrôle d'accès SY apte à contrôler l'accès à un service S1.

Dans le présent exposé, on considère des exemples de réalisation dans lesquels un utilisateur interagit avec le terminal 2000 pour accéder au service S1 dont l'accès est contrôlé par le serveur d'accès 3000. L'utilisateur utilise la carte à puce 1000 pour s'inscrire auprès du service S1, puis pour s'authentifier lorsqu'il souhaite accéder au service S1 ultérieurement à l'inscription.

Plus précisément, dans l'exemple envisagé ici, le terminal 2000 est muni d'une interface homme-machine HMI, par exemple un ordinateur personnel, un téléphone intelligent (en anglais smartphone) ou une tablette.

Dans cet exemple, le serveur d'accès 3000 est un serveur contrôlant l'accès à un service Web marchand S1, d'autres types de services étant envisageables dans le cadre de l'invention.

Dans cet exemple, le serveur distant 6000 fait partie d'un système bancaire de l'entité émettrice de la carte à puce 1000.

Dans cet exemple, un utilisateur accède, à partir de son terminal 2000, au service S1 via un réseau de télécommunications 2500 (Internet par exemple). De plus, dans cet exemple, le serveur d'accès 3000, le dispositif 5000 et le serveur distant 6000 communiquent ensemble via un réseau télécommunications 4000 (un réseau interbancaire par exemple).

Le serveur distant 6000 comporte ici un module 6100 de transmission d'un code d'accès. Ce module 6100 est apte à transmettre au serveur d'authentification 5000, via le réseau 4000, un premier code d'accès CD1 attribué à un utilisateur pour accéder au service S1.

D'une façon générale, le serveur d'authentification 5000 est apte à vérifier l'authenticité de l'utilisateur souhaitant accéder au service S1 à l'aide de son terminal 2000.

Plus précisément, le serveur d'authentification 5000 comprend dans cet exemple au moins un processeur 5100 (ou plus généralement un contrôleur), une mémoire non volatile M1, une base de données (ou mémoire) M2 et une interface de communication INT.

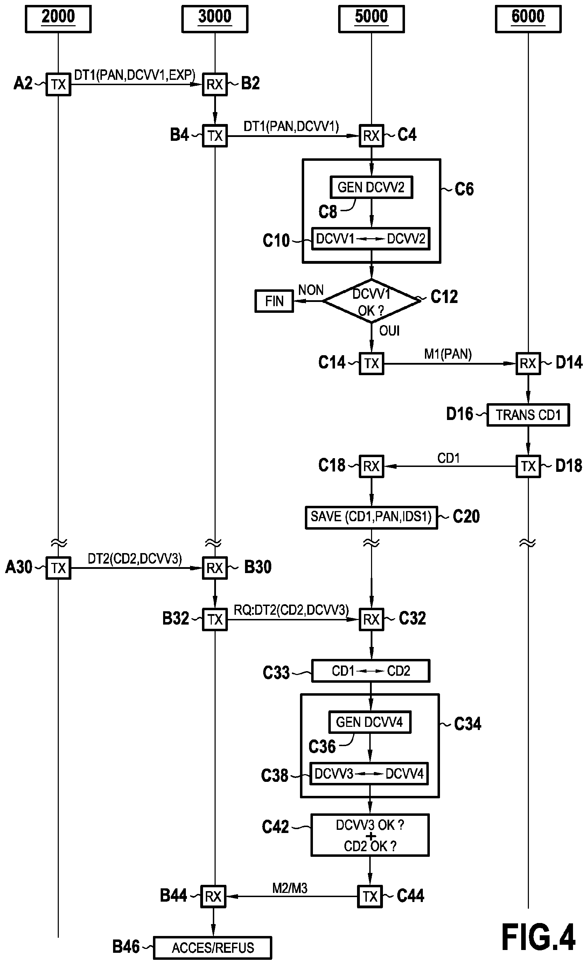

La mémoire M1 est une mémoire non volatile réinscriptible ou une mémoire morte (ROM), cette mémoire constituant un support d'enregistrement (ou support d'informations) conforme à un mode de réalisation particulier, lisible par le serveur d'authentification 5000, et sur lequel est enregistré un programme d'ordinateur PG1 conforme à un mode de réalisation particulier. Ce programme d'ordinateur PG1 comporte des instructions pour l'exécution d'un procédé d'authentification selon un mode de réalisation particulier. Les étapes de ce procédé sont représentées, dans un mode particulier de réalisation de l'invention, sur la **figure 4** décrite ultérieurement.

L'interface INT permet dans cet exemple au serveur d'authentification 5000 de communiquer avec le serveur distant 6000 et avec le serveur d'accès 3000 via le réseau 4000.

La base de données M2 est dans cet exemple apte à stocker le premier code d'accès CD1 attribué à l'utilisateur du terminal 2000 pour accéder au service Web S1, en association avec : un identifiant associé à la carte à puce 1000 (c'est-à-dire l'identifiant PAN de compte bancaire dans les exemples considérés ici) et la date EXP d'expiration de la carte à puce 1000. D'autres types d'identifiant associé à la carte à puce 1000 peuvent être envisagés dans le cadre de l'invention.

Le processeur 5100 piloté par le programme d'ordinateur PG1, met ici en œuvre un certain nombre de modules représentés en **figure 3****,** à savoir : un module de communication 5200, un module d'enregistrement 5300 et un module de vérification 5400.

Le module de communication 5200 est apte à communiquer avec le terminal utilisateur 2000 et avec le serveur d'authentification 5000 en utilisant l'interface de communication INT.

Dans cet exemple particulier, le module de communication 5200 est apte :
- à transmettre, au serveur distant 6000, l'identifiant PAN reçu préalablement du terminal 2000 ; et
- en réponse à l'identifiant PAN transmis, à recevoir du serveur distant 6000 le premier code d'accès CD1 attribué à l'utilisateur du terminal 2000 pour accéder au service Web S1.

Le module d'enregistrement 5300 est apte à enregistrer le premier code d'accès CD1 en association avec l'identifiant PAN reçu. Dans l'exemple envisagé ici, les données en question sont enregistrées dans la base de données M2.

Dans un exemple particulier, le module de communication 5200 est apte à recevoir une requête d'authentification provenant du serveur d'accès 3000, cette requête comprenant un deuxième code d'accès (noté CD2) et un premier code dynamique de sécurité généré par la carte à puce 1000 (par exemple en exécutant une fonction cryptographique à partir de l'identifiant PAN et de la date EXP de la carte à puce 1000, et à partir d'une donnée temporelle).

Toujours dans cet exemple, le module de vérification 5400 est apte à vérifier la validité du deuxième code d'accès en comparant celui-ci avec chaque code d'accès enregistré dans la base de données M2.

Le module de vérification 5400 est en outre apte à vérifier la validité du premier code dynamique de sécurité transmis par le terminal 2000. Pour ce faire, le module de vérification 5400 est dans cet exemple configuré pour générer un deuxième code dynamique de sécurité, pour comparer les premier et deuxième codes dynamiques de sécurité, et pour détecter à partir de cette comparaison si le premier code dynamique de sécurité fourni par le terminal 2000 est valide. Le module de vérification 5400 détecte par exemple que le premier code dynamique de sécurité est valide seulement s'il coïncide avec le deuxième code dynamique de sécurité. Dans un exemple particulier, le premier code dynamique fourni par le terminal 2000 est détecté comme valide uniquement en cas d'identité des premier et deuxième codes dynamiques de sécurité.

Dans un exemple particulier, le module de vérification 5400 est configuré pour générer le deuxième code dynamique de sécurité en exécutant la fonction cryptographique F à partir d'une donnée temporelle, de l'identifiant PAN associé à la carte à puce 1000 et de la date EXP de la carte à puce 1000.

D'autre part, dans l'exemple envisagé ici, le module de communication 5200 est configuré pour envoyer au serveur d'accès 3000 un message d'authentification positive uniquement si :
- le premier code dynamique de sécurité généré par la carte à puce 1000 et envoyé par le terminal 2000 est valide ; et si
- le deuxième code d'accès envoyé par le terminal 2000 est valide (c'est-à-dire si le deuxième code d'accès est enregistré en tant que code d'accès valide dans la base de donnes M2).

Un mode de réalisation particulier est à présent décrit en référence à la **figure 4****.** Plus précisément, le serveur d'authentification 5000 met en œuvre un procédé d'authentification en exécutant le programme d'ordinateur PG1. Le serveur d'accès 300 exécute ici un programme d'ordinateur PG2.

On supposera dans ce mode de réalisation que le titulaire de la carte à puce 1000 interagit avec le terminal 2000 pour s'inscrire dans un premier temps auprès du service S1, puis ultérieurement pour s'authentifier afin d'accéder au service S1.

Pour ce faire, le terminal 2000 envoie (A2) des données DT1 comprenant :
- un identifiant associé à la carte à puce 1000, à savoir l'identifiant PAN (numéro de compte bancaire) dans cet exemple ;
- la date EXP d'expiration de la carte à puce 1000 ; et
- un code dynamique de sécurité DCVV1 généré au préalable par la carte à puce 1000.

Dans l'exemple envisagé ici, les données DT1 sont des données de transaction bancaire.

Ces données DT1 sont par exemple transmises au serveur d'accès 3000 sous la forme d'une requête d'inscription visant à inscrire le titulaire de la carte à puce 1000 auprès du service S1.

Dans ce mode de réalisation, le code dynamique de sécurité DCVV1 inclus dans les données DT1 est généré au préalable par la carte à puce 1000 en exécutant la fonction cryptographique F à partir de l'identifiant PAN, de la date EXP d'expiration de la carte à puce 1000 et d'une donnée temporelle. Cette donnée temporelle est par exemple obtenue par la carte à puce 1000 à partir de l'horloge CLK.

On suppose par exemple que l'utilisateur souhaitant s'inscrire auprès du service S1 utilise sa carte à puce 1000 afin d'obtenir le code dynamique de sécurité DCVV1, puis saisit ce code dynamique de sécurité DCVV1 sur son terminal 2000.

Le serveur d'accès 3000 reçoit les données DT1 lors d'une étape de réception B2. Le serveur d'accès 3000 transmet (B4) ensuite ces données DT1 au serveur d'authentification 5000, qui les reçoit lors d'une étape de réception C4.

Le serveur d'authentification 5000 vérifie (C6) alors l'authenticité des données DT1 reçues.

Dans cet exemple particulier, le serveur d'authentification 5000 vérifie, au cours de l'étape de vérification C6, si le code dynamique de sécurité DCVV1 est valide. Pour ce faire, le serveur d'authentification 5000 génère (C8) un code dynamique de sécurité DCW2 en exécutant la fonction cryptographique F à partir des données de transaction bancaire DT1 (plus précisément l'identifiant PAN et la date EXP d'expiration) reçues en C4 et à partir d'une donnée temporelle. Dans cet exemple, le serveur d'authentification 5000 détermine à partir de l'identifiant PAN reçu que c'est la fonction cryptographique F qui doit être exécutée. Le serveur d'authentification 5000 compare (C10) ensuite le code dynamique de sécurité DCVV1 envoyé par le terminal 2000 avec le code dynamique de sécurité DCVV2 calculé à l'étape C8. Le serveur d'authentification 5000 détecte (C12) que le code dynamique de sécurité DCVV1 est valide seulement si ledit code DCVV1 coïncide avec le (ou est identique au) code dynamique de sécurité DCW2 obtenu en C8.

Si le résultat de la vérification C6 est positif (DCVV1 est valide), le serveur d'authentification 5000 procède à l'étape C14, sinon le procédé prend fin.

Au cours d'une étape d'envoi C14, le serveur d'authentification 5000 envoie au serveur distant 6000 l'identifiant PAN, ce dernier étant dans cet exemple inclus dans un message M1. Le serveur distant 6000 reçoit le message M1 au cours d'une étape de réception D14.

Le serveur distant 6000 cause alors l'envoi (D16) d'un code d'accès CD1 à l'utilisateur du terminal 2000. Ce code d'accès CD1 est attribué à l'utilisateur du terminal 2000 pour accéder ultérieurement au service S1. Le code d'accès CD1 peut prendre toute forme appropriée (clé cryptographique, chaîne de symboles...).

On suppose dans cet exemple que le code d'accès CD1 est un code unique attribué à l'utilisateur titulaire de la carte à puce 1000 pour s'authentifier auprès du serveur d'authentification 3000 au vu d'accéder au service S1.

L'envoi D16 du code d'accès CD1 par le serveur distant 6000 peut être réalisé par tout moyen approprié. Le code d'accès CD1 peut par exemple être transmis via un message SMS sur le terminal 2000 (ou sur un autre terminal). Selon une variante, le code d'accès CD1 est transmis par courrier à l'utilisateur.

De plus, le serveur distant 6000 envoie le code d'accès CD1 au serveur d'authentification 5000 au cours d'une étape d'envoi D18. Le serveur d'authentification 5000 reçoit le code d'accès CD1 au cours d'une étape de réception C18.

Au cours d'une étape d'enregistrement C20, le serveur d'authentification 5000 enregistre, dans la base de données M2, le code d'accès CD1 en association avec la date EXP d'expiration (ou plus généralement, une donnée relative à la date EXP d'expiration) et l'identifiant PAN de la carte à puce 1000. Comme indiqué par la suite, des données additionnelles, comme par exemple un identifiant du service S1 en question, peuvent en outre être enregistrées le cas échéant dans la base de données M2 en association avec le code d'accès CD1, la date EXP d'expiration et l'identifiant PAN.

A l'issue de l'étape d'enregistrement C20, l'utilisateur a réalisé son inscription au service S1 et dispose d'un code d'accès CD1 pour accéder au service S1.

On suppose à présent qu'un utilisateur tente d'accéder au service S1 à partir du terminal utilisateur 2000. Pour ce faire, le terminal 2000 envoie (A30) des données DT2 comprenant un code d'accès que l'on nomme ici CD2, et un code dynamique de sécurité DCW3. Ces données DT2 sont par exemple envoyées dans une requête d'accès.

Les données DT2 sont par exemple des données de transaction bancaire.

Dans l'exemple envisagé ici, le code dynamique de sécurité DCW3 a au préalable été généré par la carte à puce 1000 en exécutant la fonction cryptographique F à partir de l'identifiant PAN de la carte à puce 1000, de la date EXP d'expiration de la carte à puce 1000 et d'une donnée temporelle. Cette donnée temporelle est par exemple obtenue par la carte à puce 1000 à partir de l'horloge CLK.

Le serveur d'accès 3000 contrôlant l'accès au service S1 reçoit les données DT2 au cours d'une étape de réception B30.

Au cours d'une étape d'envoi B32, le serveur d'accès 3000 envoie au serveur d'authentification 5000 une requête d'authentification RQ comprenant les données DT2. Le serveur d'authentification 5000 reçoit cette requête RQ au cours d'une étape de réception C32.

Au cours d'une étape C33, le serveur d'authentification 5000 détermine si le code d'accès CD2 reçu en C32 est valide en comparant le code d'accès CD2 reçu en C32 avec le ou les codes d'accès préenregistrés dans la base de données M2. On suppose ici que l'utilisateur en question est le titulaire de la carte à puce 1000 ayant préalablement reçu le code d'accès CD1, et que le code d'accès CD2 fourni en A30 est identique à CD1. Le serveur d'authentification 5000 détermine (C33) par conséquent que le code d'accès CD2 est valide et procède à l'étape C34.

Le serveur d'authentification 5000 vérifie (C34) ensuite la validité du code dynamique de sécurité DCW3 reçu en C32. Pour ce faire, le serveur d'authentification 5000 génère (C36) un code dynamique de sécurité DCVV4 en exécutant la fonction cryptographique F à partir d'une donnée temporelle, et à partir de l'identifiant PAN et de la date EXP d'expiration enregistrés dans la base de données M2 en association avec le code d'accès CD2 (identique à CD1 dans cet exemple). Le serveur d'authentification 5000 détermine par exemple à partir de l'identifiant PAN, que c'est la fonction cryptographique F qui doit être exécutée. Le serveur d'authentification 5000 compare (C38) ensuite le code dynamique de sécurité DCW3 reçu en C32 avec le code dynamique de sécurité DCW4 calculé à l'étape C36. Le serveur d'authentification 5000 détecte (C42) que le code dynamique de sécurité DCW3 est valide seulement si ledit code DCW3 coïncide avec le (ou est identique au) code dynamique de sécurité DCVV4 obtenu en C36.

Le serveur d'authentification envoie (C44) au serveur d'accès 3000 un message M2 d'authentification positive seulement s'il détermine (C42) que les deux conditions suivantes sont satisfaites :
(1) le code d'accès CD2 est valide (autrement dit, que le code d'accès CD2 coïncide avec le (ou est identique au) code d'accès CD1) ; et
(2) le code dynamique de sécurité DCW3 est valide.

Dans l'exemple envisagé ici, on suppose que le serveur d'authentification 5000 détecte en C42 que les deux conditions (1) et (2) ci-dessus sont satisfaites. Aussi, le serveur d'authentification 5000 déclenche l'envoi C44 du message M2 d'authentification positive.

Sur réception (B44) du message M2, le serveur d'accès 3000 détermine (B46) que la requête d'accès de l'utilisateur provenant du terminal 2000 est légitime et autorise (B46) par conséquent l'accès de l'utilisateur au service S1 en question.

Si, en revanche, le serveur d'authentification 5000 détecte en C42 qu'au moins l'une des conditions (1) et (2) définies ci-dessus n'est pas satisfaite, il envoie en C44 un message M3 d'authentification négative. Sur réception (B44) du message M3, le serveur d'accès 3000 détermine (B46) que la requête d'accès de l'utilisateur provenant du terminal 2000 n'est pas légitime et refuse (B46) par conséquent l'accès de l'utilisateur au service S1 en question.

Conformément au mode de réalisation décrit en référence à la **figure 4****,** on peut ainsi envisager par exemple la réalisation du scénario suivant :
- un utilisateur utilise en A2 sa carte bancaire de type DCVV pour acheter un article sur un site Web marchand (l'achat par exemple d'un titre de transport sur le site Web d'un service de transport) ;
- l'utilisateur reçoit ensuite un code d'accès CD1 envoyé en D16 par sa banque par courrier ou SMS ;
- l'utilisateur utilise ultérieurement en A30 son code d'accès CD1 et un code dynamique de sécurité généré par sa carte bancaire DCVV pour récupérer son article depuis un terminal appartenant au réseau du marchand (il récupère par exemple un titre de transport sur une borne appartenant à un réseau du service de transport).

L'invention permet avantageusement de sécuriser l'accès d'un utilisateur à un service, tel qu'un service web par exemple. L'invention prévoit l'attribution d'un code d'accès à un utilisateur et le stockage, dans une base de données, du code d'accès en association avec un identifiant PAN associé à la carte à puce DCW de l'utilisateur et la date d'expiration de ladite carte. L'utilisateur peut ainsi accéder ultérieurement à un service, ou réaliser une transaction, en fournissant son code d'accès et un code dynamique de sécurité généré par sa carte à puce DCVV. Contrairement aux techniques conventionnelles, l'utilisateur n'a pas besoin de fournir son numéro de compte bancaire PAN ou la date EXP d'expiration de sa carte bancaire lorsqu'il accès au service en question. Un code d'accès lui est fourni à cette fin par l'entité compétente (sa banque par exemple). Il est ainsi possible de limiter la diffusion du numéro de compte bancaire PAN et de la date EXP d'expiration de la carte bancaire, ces données sensibles étant susceptibles d'être dérobées. Pour ce faire, les données DT2 envoyées par le terminal 2000 lors de l'étape A30 (**figure 4**) ne comportent ni l'identifiant bancaire PAN de la carte bancaire 1000 ni la date d'expiration EXP de ladite carte bancaire 1000. De même, la requête d'authentification RQ reçue par le serveur d'authentification 5000 à l'étape C32 (**figure 4**) ne comporte ni ledit identifiant bancaire PAN de la carte bancaire 1000 ni ladite date d'expiration EXP de la carte bancaire 1000. Le serveur d'authentification 5000 retrouve l'identifiant PAN et la date d'expiration EXP à partir du code d'accès fourni par l'utilisateur, en consultant sa mémoire M2 comme expliqué ci-avant en référence à l'étape C34.

L'invention peut offrir une authentification renforcée en faisant intervenir un code d'accès statique attribué par une entité compétente à l'utilisateur, ainsi qu'un code dynamique (le code DCW) qui varie dans le temps.

De plus, un code d'accès spécifique peut être attribué à l'utilisateur pour chaque service parmi une pluralité de service. Il est ainsi possible d'offrir un contrôle flexible et sécurisé de l'accès d'un utilisateur à une pluralité de services.

On comprendra que divers variantes de réalisation des exemples décrits ci-dessus peuvent être envisagées dans le cadre de l'invention.

Selon un mode de réalisation particulier, le serveur d'authentification 5000 enregistre en C20 (**figure 4**) un identifiant du service concerné, en association avec le code d'accès CD1 et l'identifiant PAN. Il est par exemple possible d'enregistrer dans la base de données M2, pour un même identifiant PAN, des codes d'accès différents correspondant à des services respectifs. Dans un exemple particulier, la requête RQ reçue en C32 par le serveur d'authentification 5000 comprend l'identifiant du service auquel l'utilisateur souhaite accéder.

Selon un mode de réalisation particulier, un même code d'accès CD1, dit code d'accès universel, est attribué à un utilisateur pour accéder à une pluralité de services. Dans un exemple particulier, un tel code d'accès CD1 universel est enregistré par le serveur d'authentification 5000 dans la base de données M2 en association avec l'identifiant PAN de l'utilisateur. De façon avantageuse, une banque ou autre peut ainsi offrir un service d'authentification (basé sur le serveur d'authentification 5000, et éventuellement le serveur distant 6000) universel et de haut niveau de sécurité aux utilisateurs et aux fournisseurs de services S1. Ce mode de réalisation présente un avantage en ce que les utilisateurs n'ont alors besoin de ne mémoriser qu'un seul code d'accès CD1 pour accéder à une pluralité de services S1 (par exemple pour tous les services auxquels l'utilisateur est autorisé à accéder), un haut niveau de sécurité étant offert grâce à l'utilisation du code de sécurité dynamique DCW (étant donné son aspect dynamique et sa génération cryptographique).

Selon un mode de réalisation particulier, un code d'accès CD1 universel (permettant l'accès à une pluralité de services) est enregistré par le serveur d'authentification M2 dans la base de données M2 en association avec l'identifiant PAN de l'utilisateur et chaque identifiant d'une pluralité de services auxquels l'utilisateur est autorisé à accéder. En variante, aucun identifiant de service n'est enregistré et le service d'authentification offert par la banque ou autre à partir du code d'accès CD1 est valable pour tous les services possibles.

Selon un mode de réalisation particulier, le code d'accès CD1 attribué à l'utilisateur n'est valide que pour une période de temps donnée. Il est ainsi possible d'adapter dans le temps les droits d'accès d'une pluralité d'utilisateurs à un service donné. Selon un exemple particulier, une condition temporelle est enregistrée dans la base de données M2 en association avec le code d'accès CD1, l'identifiant PAN et la date EXP d'expiration. Dans ce cas, le serveur d'authentification 5000 détecte en C42 que l'authentification est passée avec succès uniquement si la condition temporelle est satisfaite.

On notera que, dans les modes de réalisation décrits ci-avant, l'utilisateur s'inscrit auprès du service S1 en envoyant un code dynamique de sécurité DCVV en plus de son identifiant PAN. Selon une variante, le terminal 2000 n'envoie pas le code dynamique de sécurité DCVV en A2 (**figure 4**), l'authentification de l'utilisateur pouvant si besoin être réalisée d'une façon différente.

Selon un mode de réalisation particulier, lors la phase d'inscription de l'utilisateur au service S1, l'identifiant PAN peut être reçu par le serveur d'authentification 5000 et/ou par le serveur distant 6000 sans passer par le terminal 2000 et/ou sans passer par le serveur d'accès 3000. Ainsi, dans un exemple particulier décrit en référence à la **figure 4****,** le serveur d'authentification 5000 reçoit en C4 l'identifiant PAN directement du terminal 2000 sans passer par le serveur d'accès 3000, ou bien sans passer ni par le terminal 2000 ni par le serveur d'accès 3000. De même, selon une variante, le serveur distant 6000 peut recevoir (D14) l'identifiant PAN directement du terminal 2000 ou du serveur d'accès 3000.

L'utilisateur peut par exemple se rendre à sa banque, se connecter à un service en ligne tel qu'un service d'e-banking, ou encore se connecter au serveur distant 6000 avec un autre terminal que le terminal 2000. Pour s'authentifier et ainsi obtenir son code d'accès CD1, l'utilisateur utiliser par exemple le code secret PIN de sa carte bancaire 1000 ou présenter une pièce d'identité, d'autres méthodes d'authentification étant envisageables.

Selon un mode de réalisation particulier décrit en référence à la **figure 4****,** lors de la phase d'inscription de l'utilisateur au service S1, l'utilisateur de la carte à puce 1000 peut demander à sa banque (ou tout autre organisme compétent), ou au serveur distant 6000, de lui fournir le code d'accès CD1 sans qu'il soit nécessaire pour l'utilisateur de fournir l'identifiant PAN de sa carte à puce 1000. En réponse à cette requête, la banque ou le serveur distant 6000 peut par exemple transmettre le code d'accès CD1 au serveur d'authentification 5000, au terminal 2000 ou même directement à l'utilisateur. L'utilisateur peut par exemple réaliser cette demande en se rendant à sa banque ou en se connectant à un service en ligne tel qu'un service d'e-banking. Afin d'obtenir son code d'accès CD1, l'utilisateur s'authentifie selon toute manière appropriée, comme par exemple en présentant un code d'accès e-banking ou une pièce d'identité.

Selon un mode de réalisation particulier décrit en référence à la **figure 4****,** lors de la phase d'inscription de l'utilisateur au service S1, le terminal 2000, ou éventuellement le serveur d'accès 3000, envoie directement au serveur d'authentification 5000 le code d'accès CD1 et l'identifiant PAN associé, de sorte que le serveur d'authentification 5000 mémorise dans sa base de données M2 le code d'accès CD1 en association avec l'identifiant PAN. Dans ce cas, le serveur distant 6000 n'est pas nécessaire. Pour ce faire, lors de la phase d'inscription au service S1, le serveur d'accès 3000 peut, par exemple, déterminer le code d'accès CD1 à partir de l'identifiant PAN reçu en B2 du terminal 2000 **(****figure 4****).** A cette fin, le serveur d'accès 3000 contient par exemple en mémoire le code d'accès CD1 associé à l'identifiant PAN de l'utilisateur. Selon un autre exemple, lors de sa phase d'inscription au service S1, l'utilisateur fournit lui-même le code d'accès CD1 et son identifiant PAN au serveur d'authentification 5000, en passant éventuellement par le terminal 2000 et/ou par le serveur d'accès 3000. L'utilisateur peut par exemple saisir lui-même le code d'accès CD1 de son choix, ainsi que l'identifiant PAN de sa carte 1000, sur son terminal 2000 lors de sa phase d'inscription.

Dans les modes de réalisation décrits précédemment, la carte à puce 1000 et le module de vérification 5400 utilisent chacun une donnée temporelle (ou paramètre temporel) pour générer chaque code dynamique de sécurité DCW. L'homme du métier comprendra que ces données temporelles doivent être synchronisées pour permettre la comparaison de ces codes dynamiques de sécurité. En pratique, pour palier à ces problèmes de synchronisation, le module de vérification 5400 peut être configuré pour générer plusieurs codes dynamiques de sécurité en utilisant différents paramètres temporels (par exemple plusieurs paramètres temporels successifs dans le temps) pour la vérification d'un seul code dynamique de sécurité. Dans ce cas, l'authentification est passée avec succès dès lors que l'un des codes dynamiques de sécurité générés par le module de vérification 54000 correspond au code dynamique de sécurité généré par la carte à puce 1000.

En variante, la donnée temporelle peut être remplacée par un compteur qui est incrémenté :
- du côté de la carte à puce 1000 : à chaque fois que la carte génère un nouveau code dynamique de sécurité DCVV, par exemple lorsque l'utilisateur appuie sur le bouton poussoir 1400 ; et
- du côté du serveur d'authentification 5000 (plus particulièrement son module de vérification 5400) : à chaque fois que celui-ci génère de son côté un code dynamique de sécurité DCVV pour vérifier la validité d'un code dynamique de sécurité DCVV généré par la carte à puce 1000.

Là encore, l'homme du métier comprendra que ces compteurs doivent être synchronisés pour permettre la comparaison de ces codes. En pratique, pour palier à ces problèmes de synchronisation, le serveur d'authentification peut générer plusieurs codes dynamiques de sécurité en utilisant différentes valeurs de compteur, le code dynamique de sécurité étant jugé valide dès lors que l'un de ces deuxièmes codes dynamiques de sécurité correspond au code dynamique de sécurité généré par la carte à puce.

On considère à présente une variante aux modes de réalisation décrits ci-avant en référence notamment à la **figure 4****.** Selon cette variante, le serveur d'accès 3000 joue également le rôle du serveur distant 6000 (autrement dit, les serveurs 3000 et 6000 forment un seul et même serveur) dans le sens où c'est le serveur d'accès 3000 qui, lors de la phase d'inscription de l'utilisateur au service S1, obtient le code d'accès CD1 et fournit ce-dernier au serveur d'authentification 5000. Selon cette variante, l'opérateur du service S1 peut ainsi décider quel code d'accès CD1 est attribué à chacun des utilisateurs du service S1.

Selon une mise en œuvre particulière de cette variante, lors de la phase d'inscription de l'utilisateur au service S1, le terminal 2000 transmet les données de transaction DT1 au serveur d'accès 3000 comme déjà décrit en référence aux étapes A2 et B2 illustrées en **figure 4****.** Les données DT1 comportent en particulier l'identifiant PAN et la date d'expiration EXP de la carte à puce 1000. Dans cet exemple, ces données DT1 sont accompagnées d'un identifiant, dit identifiant d'accès, de l'utilisateur pour s'identifier auprès du service S1 (par exemple, un identifiant de profil ou login). En réponse aux données ainsi reçues, le serveur d'accès génère (ou obtient) le code d'accès CD1 attribué à l'utilisateur pour accéder au service S1, puis transmet, au serveur d'authentification 5000, ce code d'accès CD1 (statique) avec l'identifiant PAN et la date d'expiration EXP, ainsi qu'éventuellement le code dynamique DCVV1 généré par la carte à puce 1000 lorsqu'un tel code dynamique est utilisé pour authentifier l'utilisateur lors de la phase d'inscription. Le serveur d'accès 6000 enregistre par ailleurs (dans une base de données par exemple) le code d'accès CD1 attribué à l'utilisateur en association avec l'identifiant d'accès de l'utilisateur (son identifiant de profil par exemple). Lors de la phase d'inscription, le serveur d'authentification 5000 n'a donc pas besoin de requérir le code d'accès CD1 au serveur distant 6000 comme décrit précédemment en référence aux étapes C14 et C18 illustrées en **figure 4****.** Selon cette variante, le serveur d'authentification réalise les étapes C6 et C12 comme précédemment décrites en référence à la **figure 4** pour vérifier la validité du code dynamique DCVV1 fourni par l'utilisateur (dans le cas où un tel code dynamique est utilisé lors de l'inscription) et, si ce code DCVV1 est valide, procède à l'étape C20 comme précédemment décrite (**figure 4**) afin d'enregistrer dans sa base de données M2 le code d'accès CD1 en association avec l'identifiant PAN et la date d'expiration EXP. Des données additionnelles (identifiant de service etc.) peuvent en outre être enregistrées par le serveur d'authentification 5000 en association avec ces données, de façon analogue au mode de réalisation décrit ci-avant en référence à la **figure 4****.** Comme déjà indiqué, on peut envisager que le terminal 2000 n'envoie pas de code dynamique DCVV1 lors de l'inscription, l'authentification de l'utilisateur pouvant si besoin être réalisée d'une façon différente.

Toujours selon une mise en œuvre particulière de cette variante, lors de la phase d'accès au service S1, le terminal 2000 transmet au serveur d'accès 3000 des données de transaction notées ici DT3, de façon analogue aux étapes A30 et B30 illustrées en **figure 4****.** Les données DT3 comportent en particulier le code dynamique DCVV3 généré par la carte à puce 1000 ainsi que l'identifiant d'accès qu'utilise l'utilisateur du terminal 2000 pour s'identifier auprès du service S1. Selon cette mise en œuvre, le serveur d'accès 3000 détermine, à partir de l'identifiant d'accès fourni dans les données DT3, le code d'accès CD1 préalablement enregistré lors de la phase d'inscription de l'utilisateur au service S1. Pour ce faire, le serveur d'accès 3000 consulte par exemple sa base de données. Le serveur d'accès 3000 transmet ensuite au serveur d'authentification 5000, dans une requête d'authentification RQ2 (similaire à la requête RQ représentée en **figure 4**), le code d'accès CD1 en association avec le code dynamique DCVV3 fourni par l'utilisateur. Le serveur d'authentification 5000 vérifie alors le code d'accès CD1 fourni par le serveur d'accès 3000 de façon analogue à l'étape C33 décrite ci-avant en référence à la **figure 4****,** puis vérifie la validité du code dynamique DCW3 de façon analogue à l'étape C34 (**figure 4****).** Si le code d'accès fourni et le code dynamique DCW3 fournis par le serveur d'accès 3000 sont valides, le serveur d'authentification 5000 envoie au serveur d'accès 3000 un message M2 d'authentification positive de façon analogue aux étapes C42-C44 déjà décrites en référence à la **figure 4****.** A noter que, de façon analogue aux modes de réalisation précédents, les données DT3 envoyées par le terminal 2000 et la requête d'authentification RQ2 envoyée par le serveur d'accès 3000 au serveur d'authentification 5000 ne comportent ni l'identifiant bancaire PAN de la carte bancaire 1000 ni la date d'expiration EXP de la carte bancaire 1000. Le serveur d'authentification 5000 retrouve, en consultant sa mémoire M2, l'identifiant PAN et la date d'expiration EXP à partir du code d'accès CD1 fourni par le serveur d'accès 3000, et utilise ensuite l'identifiant PAN et la date d'expiration EXP pour vérifier la validité du code dynamique DCW3 de façon analogue à l'étape de vérification C34 illustrée en **figure 4****.**

La variante ci-dessus est avantageuse en ce qu'il n'est pas nécessaire de faire intervenir un serveur distant 6000 (**figure 2**), appartenant par exemple à un réseau bancaire, pour fournir au serveur d'authentification 5000, lors de la phase d'inscription, le code d'accès attribué à un utilisateur pour accéder au serveur S1. Par ailleurs, lorsque l'utilisateur souhaite accéder au service S1, celui-ci fournit simplement son identifiant d'accès (login ou équivalent) et un code dynamique DCVV généré par sa carte bancaire 1000 pour s'authentifier. C'est le serveur d'accès 3000 qui déduit, à partir de l'identifiant d'accès fourni par l'utilisateur, le code d'accès CD1 préalablement attribué à l'utilisateur, puis transmet ce code d'accès CD1 au serveur d'authentification 5000 afin que ce dernier puisse vérifier la validité du code dynamique DCW fourni par l'utilisateur. De façon avantageuse, l'utilisateur n'a pas besoin de fournir le code d'accès CD1 au serveur d'accès 3000 pour accéder au service S1 concerné (autrement dit, les données DT3 n'ont pas besoin de comporter le code d'accès), ce qui permet de simplifier encore d'avantage la procédure d'authentification du point de vue de l'utilisateur. L'utilisateur n'a pas nécessairement connaissance du code d'accès CD1 attribué par le serveur d'accès lors de la phase d'inscription.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Serveur d'authentification (5000) comprenant:
- un module de communication (5200) apte à transmettre, à un serveur distant (6000), un identifiant bancaire de type PAN associé à une carte bancaire (1000), ledit module de communication (5200) étant apte, en réponse audit identifiant PAN transmis, à recevoir du serveur distant (6000) un premier code d'accès (CD1) pour accéder à un service (S1) ;
- un module d'enregistrement (5300) apte à enregistrer, dans une mémoire, l'identifiant bancaire PAN de la carte bancaire (1000), en association avec une date d'expiration (EXP) de la carte bancaire et le premier code d'accès (CD1) à un service (S1);
le module de communication (5200) étant apte à recevoir une requête d'authentification provenant d'un serveur d'accès (3000) contrôlant l'accès audit service (S1), ladite requête comprenant un deuxième code d'accès (CD2) et un premier code dynamique de sécurité (DCW3) généré par la carte bancaire (1000);
le serveur d'authentification comprenant en outre :
- un module de vérification (5400) configuré pour générer un deuxième code dynamique de sécurité (DCVV4) à partir de l'identifiant bancaire PAN et de la date d'expiration (EXP) enregistrés dans ladite mémoire, pour comparer les premier et deuxième codes dynamiques de sécurité, et pour détecter que le premier code dynamique de sécurité (DCVV3) est valide seulement s'il coïncide avec le deuxième code dynamique de sécurité (DCVV4); et
- ledit module de communication (5200) étant configuré pour envoyer au serveur d'accès (3000) un message d'authentification positive (M2) seulement si :
∘ le deuxième code d'accès (CD2) coïncide avec le premier code d'accès (CD1) enregistré ; et
∘ le premier code dynamique de sécurité (DCVV3) est valide.

2. Serveur d'authentification selon la revendication 1, dans lequel le premier code dynamique de sécurité (DCVV3) reçu par le module de communication (5200) dans la requête d'authentification est généré par la carte bancaire (1000) en exécutant une fonction cryptographique à partir de l'identifiant bancaire PAN et de la date d'expiration (EXP), et à partir d'une donnée temporelle ou d'un compteur du nombre de premiers codes dynamiques de sécurité (DCW3).

3. Serveur d'authentification selon la revendication 2, dans lequel le module de vérification (5400) est configuré pour générer le deuxième code dynamique de sécurité (DCVV4) en exécutant la fonction cryptographique à partir dudit identifiant bancaire PAN et de la date d'expiration (EXP) enregistrés dans ladite mémoire et à partir d'une donnée temporelle ou d'un compteur du nombre de deuxième code dynamique de sécurité (DCW4).

4. Serveur d'authentification selon l'une quelconque des revendications 1 à 3, dans lequel le module (5200) de communication est apte à recevoir, dans des données de transaction bancaire (DT1), l'identifiant PAN à transmettre audit serveur distant (6000).

5. Serveur d'authentification selon la revendication 4, dans lequel le module (5200) de communication est apte à recevoir les données de transaction bancaire (DT1) depuis le serveur d'accès (3000).

6. Serveur d'authentification selon la revendication 4 ou 5, dans lequel :
- les données de transaction bancaires (DT1) comportent un troisième code dynamique de sécurité (DCCV1) généré par ladite carte bancaire (1000), l'identifiant bancaire PAN et la date d'expiration (EXP) ;
- le module de vérification (5400) est apte à vérifier la validité du troisième code dynamique de sécurité (DCVV1) ;
- ledit module de communication (5200) étant configuré pour transmettre au serveur distant (6000), seulement si la vérification de validité du troisième code dynamique de sécurité (DCVV1) est passée avec succès, l'identifiant PAN et un message (M1) indiquant que ledit troisième code dynamique de sécurité (DCVV1) est valide ; et
- ledit module de communication (5200) étant apte à recevoir du serveur distant (6000), en réponse à l'identifiant et audit message (M1) transmis, ledit premier code d'accès (CD1) à enregistrer par le module d'enregistrement (5300).

7. Serveur d'authentification selon la combinaison des revendications 2, 3 et 6, dans lequel :
- le troisième code dynamique de sécurité (DCVV1) est généré par la carte bancaire (1000) à partir de l'identifiant PAN et de la date d'expiration (EXP) de la carte bancaire (100), et à partir d'une donnée temporelle ou du compteur du nombre de premiers codes dynamiques de sécurité (DCW3) ;
- le module de vérification (5400) est configuré pour générer un quatrième code dynamique de sécurité (DCVV2) à partir de l'identifiant PAN et de la date d'expiration (EXP) de la carte bancaire (100), et à partir d'une donnée temporelle ou du compteur du nombre de deuxièmes codes dynamiques de sécurité (DCVV4), pour comparer les troisième et quatrième codes dynamiques de sécurité, et pour détecter que le troisième code dynamique de sécurité (DCVV1) est valide seulement si ledit troisième code dynamique de sécurité (DCVV1) coïncide avec le quatrième code dynamique de sécurité (DCW2).

8. Serveur d'authentification selon l'une quelconque des revendications 1 à 7, dans lequel le module d'enregistrement (5300) est configuré pour enregistrer un identifiant (IDS1) du service (S1) en association avec l'identifiant PAN, la date d'expiration (EXP) et le premier code d'accès (CD1) de sorte que le module de vérification (5400) soit apte à déterminer le premier code d'accès (CD1) associé audit service (S1).

9. Serveur d'authentification selon l'une quelconque des revendications 1 à 8, dans lequel le module d'enregistrement (5300) est configuré pour enregistrer le premier code d'accès (CD1) dans ladite mémoire en association avec une pluralité de services.

10. Serveur d'authentification selon l'une quelconque des revendications 1 à 9, dans lequel :
- le module d'enregistrement (5300) est configuré pour enregistrer une condition temporelle en association avec l'identifiant PAN, la date d'expiration (EXP) et le premier code d'accès (CD1),
- le module de vérification (5400) étant configuré pour déterminer que le premier code d'accès (CD1) est valide tant que la condition temporelle est satisfaite.

11. Serveur d'authentification (5000) selon l'une quelconque des revendications 1 à 10, dans lequel le module de communication est configuré pour envoyer au serveur d'accès (3000) un message d'authentification négative, si le deuxième code d'accès (CD2) ne coïncide pas avec le premier code d'accès (CD1) enregistré ou si le premier code dynamique de sécurité (DCVV3) n'est pas valide.

12. Système (SY) de contrôle d'accès à un service (S1) comprenant :
- un serveur d'authentification (5000) selon l'une quelconque des revendications 1 à 11; et
- un serveur d'accès (3000) apte à contrôler l'accès audit service (S1), ledit serveur d'accès étant configuré pour autoriser l'accès audit service à un utilisateur associé audit identifiant PAN, uniquement sur réception du message d'authentification positive du serveur d'authentification.

13. Procédé d'authentification mise en œuvre par un serveur d'authentification (5000), comprenant:
- transmission (C14), à un serveur distant (6000), d'un identifiant bancaire PAN associé à une carte bancaire (1000);
- réception (C18), en réponse à ladite transmission (C14), d'un premier code d'accès (CD1) pour accéder à un service (S1);
- enregistrement (C20) de l'identifiant PAN en association avec le premier code d'accès (CD1) ;
- réception (C32) d'une requête d'authentification (RQ) provenant d'un serveur (3000) d'accès contrôlant l'accès audit service (S1), ladite requête comprenant un deuxième code d'accès (CD2) et un premier code dynamique de sécurité (DCVV3) généré par la carte bancaire (1000) en exécutant une fonction cryptographique à partir d'une donnée temporelle ;
- vérification (C34) de la validité du premier code dynamique de sécurité (DCW3), ladite vérification comprenant la génération (C36) d'un deuxième code dynamique de sécurité (DCVV4) en exécutant ladite fonction cryptographique à partir d'une donnée temporelle et à partir dudit identifiant PAN enregistré, la comparaison (C38) des premier et deuxième codes dynamiques de sécurité, et la détection (C34) que le premier code dynamique de sécurité (DCVV3) est valide seulement s'il coïncide avec le deuxième code dynamique de sécurité (DCVV4) ; et
- envoi (C42) au serveur d'accès (3000) d'un message d'authentification positive (M2) seulement si :
∘ le deuxième code d'accès (CD2) coïncide avec le premier code d'accès (CD1) enregistré ; et
∘ le premier code dynamique de sécurité (DCW3) est valide.

14. Programme d'ordinateur (PG2 ; PG3) comportant des instructions pour l'exécution des étapes d'un procédé selon la revendication 13 lorsque ledit programme est exécuté par un ordinateur.

15. Support d'enregistrement (M1) lisible par un ordinateur sur lequel est enregistré un programme d'ordinateur (PG2 ; PG3) comprenant des instructions pour l'exécution des étapes d'un procédé selon la revendication 13.

## Patentansprüche

1. Authentifizierungsserver (5000), umfassend:
- ein Kommunikationsmodul (5200), das geeignet ist, an einen Fernserver (6000) eine Bankkennung des Typs der PAN-Kennung, die einer Bankkarte (1000) zugeordnet ist, zu übertragen, wobei das Kommunikationsmodul (5200) geeignet ist, als Antwort auf die übertragene PAN-Kennung, von dem Fernserver (6000) einen ersten Zugangscode (CD1) zu empfangen ist, um auf einen Dienst (S1) zuzugreifen,
- ein Speichermodul (5300), das geeignet ist, in einem Speicher die PAN-Kennung der Bankkarte (1000) in Verbindung mit einem Ablaufdatum (EXP) der Bankkarte und dem ersten Zugangscode (CD1) zu einem Dienst (S1) zu speichern, wobei das Kommunikationsmodul (5200) geeignet ist, eine Authentifizierungsanfrage, die von einem Zugangsserver (3000) kommt, der den Zugang zu dem Dienst (S1) kontrolliert, zu erhalten, wobei die Anfrage einen zweiten Zugangscode (CD2) und einen ersten dynamischen Sicherheitscode (DCVV3) aufweist, der durch die Bankkarte (1000) generiert wird,
wobei der Authentifizierungsserver ferner aufweist:
- ein Prüfungsmodul (5400), das konfiguriert ist, um einen zweiten dynamischen Sicherheitscode (DCVV4) ausgehend von der PAN-Bankkennung und dem Ablaufdatum (EXP), die in dem Speicher gespeichert sind, zu generieren, um den ersten und den zweiten dynamischen Sicherheitscode zu vergleichen und um zu erfassen, dass der erste dynamische Sicherheitscode (DCVV3) nur dann gültig ist, wenn er mit dem zweiten dynamischen Sicherheitscode (DCVV4) übereinstimmt, und
- wobei das Kommunikationsmodul (5200) konfiguriert ist, um nur dann eine positive Authentifizierungsnachricht (M2) an den Zugangsserver (3000) zu senden, wenn
o der zweite Zugangscode (CD2) mit dem ersten gespeicherten Zugangscode (CD1) übereinstimmt und
o der erste dynamische Sicherheitscode (DCVV3) gültig ist.

2. Authentifizierungsserver nach Anspruch 1, wobei der erste dynamische Sicherheitscode (DCVV3), der von dem Kommunikationsmodul (5200) in der Authentifizierungsanfrage empfangen wird, durch die Bankkarte (1000) generiert wird, indem eine kryptographische Funktion ausgehend von der PAN-Bankkennung und dem Ablaufdatum (EXP) und ausgehend von einem Temporaldatum oder einem Zähler der Anzahl von ersten dynamischen Sicherheitscodes (DCVV3) ausgeführt wird.

3. Authentifizierungsserver nach Anspruch 2, wobei das Prüfungsmodul (5400) konfiguriert ist, um den zweiten dynamischen Sicherheitscode (DCVV4) zu generieren, indem die kryptographische Funktion ausgehend von der PAN-Bankkennung und dem Ablaufdatum (EXP), die in dem Speicher gespeichert sind, und ausgehend von einem Temporaldatum oder einem Zähler der Anzahl von zweiten dynamischen Sicherheitscodes (DCVV4) ausgeführt wird.

4. Authentifizierungsserver nach einem der Ansprüche 1 bis 3, wobei das Kommunikationsmodul (5200) geeignet ist, in Banktransaktionsdaten (DT1) die PAN-Kennung zu empfangen, die an den Fernserver (6000) zu senden ist.

5. Authentifizierungsserver nach Anspruch 4, wobei das Kommunikationsmodul (5200) geeignet ist, Banktransaktionsdaten (DT1) von dem Zugangsserver (3000) zu empfangen.

6. Authentifizierungsserver nach Anspruch 4 oder 5, wobei:
- die Banktransaktionsdaten (DT1) einen dritten dynamischen Sicherheitscode (DCCV1) aufweisen, der von der Bankkarte (1000), der PAN-Bankkennung und dem Ablaufdatum (EXP) generiert wird,
- das Prüfungsmodul (5400) geeignet ist, die Gültigkeit des dritten dynamischen Sicherheitscodes (DCVV1) zu überprüfen,
- wobei das Kommunikationsmodul (5200) konfiguriert ist, um nur dann, wenn die Überprüfung der Gültigkeit des dritten dynamischen Sicherheitscodes (DCVV1) mit Erfolg durchgeführt worden ist, die PAN-Kennung und eine Nachricht (M1), die angibt, dass der dritte dynamische Sicherheitscode (DCVV1) gültig ist, an den Fernserver (6000) zu senden und
- wobei das Kommunikationsmodul (5200) geeignet ist, von dem Fernserver (6000) als Antwort auf die Kennung und auf die Nachricht (M1), die gesendet worden sind, den ersten Zugangscode (CD1) zu empfangen, der von dem Speichermodul (5300) zu speichern ist.

7. Authentifizierungsserver nach der Kombination der Ansprüche 2, 3 und 6, wobei:
- der dritte dynamische Sicherheitscode (DCVV1) durch die Bankkarte (1000) ausgehend von der PAN-Bankkennung und dem Ablaufdatum (EXP) der Bankkarte (1000) und ausgehend von einem Temporaldatum oder einem Zähler der Anzahl von ersten dynamischen Sicherheitscodes (DCVV3) generiert wird.
- das Prüfungsmodul (5400) konfiguriert ist, um einen vierten dynamischen Sicherheitscode (DCVV2) ausgehend von der PAN-Bankkennung und dem Ablaufdatum (EXP) der Bankkarte (1000) und ausgehend von einem Temporaldatum oder dem Zähler der Anzahl von zweiten dynamischen Sicherheitscodes (DCVV4) zu generieren, um den dritten und den vierten dynamischen Sicherheitscode zu vergleichen und um zu erfassen, dass der dritte dynamischen Sicherheitscode (DCVV1) nur dann gültig ist, wenn der dritte dynamische Sicherheitscode (DCVV1) mit dem vierten dynamischen Sicherheitscode (DCVV2) übereinstimmt.

8. Authentifizierungsserver nach einem der Ansprüche 1 bis 7, wobei das Speichermodul (5300) konfiguriert ist, um eine Kennung (IDS1) des Dienstes (S1) in Verbindung mit der PAN-Kennung, dem Ablaufdatum (EXP) und dem ersten Zugangscode (CD1) derart zu speichern, dass das Prüfungsmodul (5400) geeignet ist, den ersten Zugangscode (CD1) zu bestimmen, der dem Dienst (S1) zugeordnet ist.

9. Authentifizierungsserver nach einem der Ansprüche 1 bis 8, wobei das Speichermodul (5300) konfiguriert ist, um den ersten Zugangscode (CD1) in dem Speicher in Verbindung mit mehreren Diensten zu speichern.

10. Authentifizierungsserver nach einem der Ansprüche 1 bis 9, wobei:
- das Speichermodul (5300) konfiguriert ist, um eine Zeitbedingung in Verbindung mit der PAN-Kennung, dem Ablaufdatum (EXP) und dem ersten Zugangscode (CD1) zu speichern,
- wobei das Prüfungsmodul (5400) konfiguriert ist, um zu bestimmen, dass der erste Zugangscode (CD1) gültig ist, sofern die Zeitbedingung erfüllt ist.

11. Authentifizierungsserver (5000) nach einem der Ansprüche 1 bis 10, wobei das Kommunikationsmodul konfiguriert ist, um dem Zugangsserver (3000) eine negative Authentifizierungsnachricht zu senden, wenn der zweite Zugangscode (CD2) nicht mit dem ersten gespeicherten Zugangscode (CD1) übereinstimmt oder wenn der erste dynamische Sicherheitscode (DCVV3) nicht gültig ist.

12. Zugangskontrollsystem (SY) zu einem Dienst (S1), umfassend:
- einen Authentifizierungsserver (5000) nach einem der Ansprüche 1 bis 11 und
- einen Zugangsserver (3000), der geeignet ist, den Zugang zu dem Dienst (S1) zu kontrollieren, wobei der Zugangsserver konfiguriert ist, um einem Benutzer, der der PAN-Kennung zugeordnet ist, den Zugang zu dem Dienst nur nach Empfangen der positiven Authentifizierungsnachricht von dem Authentifizierungsserver zu genehmigen.

13. Verfahren zur Authentifizierung, das von einem Bankserver (5000) umgesetzt wird, umfassend:
- das Übertragen (C14) von einer PAN-Kennung, die einer Bankkarte (1000) zugeordnet ist, an einen Fernserver (6000),
- als Antwort auf das Übertragen (C14) das Empfangen (C18) eines ersten Zugangscodes (CD1), um auf einen Dienst (S1) zuzugreifen,
- das Speichern (C20) der PAN-Kennung in Verbindung mit dem ersten Zugangscode (CD1),
- das Empfangen (C32) einer Authentifizierungsanfrage (RQ), die von einem Zugangsserver (3000) kommt, der den Zugang zu dem Dienst (S1) kontrolliert, wobei die Anfrage einen zweiten Zugangscode (CD2) und einen ersten dynamischen Sicherheitscode (DCVV3) aufweist, der durch die Bankkarte (1000) generiert wird, indem eine kryptographische Funktion ausgehend von einem Temporaldatum durchgeführt wird,
- das Überprüfen (C34) der Gültigkeit des erste dynamischen Sicherheitscodes (DCVV3), wobei das Überprüfen das Generieren (C36) eines zweiten dynamischen Sicherheitscodes (DCVV4) aufweist, indem die kryptographische Funktion ausgehend von einem Temporaldatum und ausgehend von der gespeicherten PAN-Bankkennung, dem Vergleichen (C38) des ersten und des zweiten dynamischen Sicherheitscodes und dem Erfassen (C34) durchgeführt wird, dass der erste dynamische Sicherheitscode (DCVV3) nur dann gültig ist, wenn er mit dem zweiten dynamischen Sicherheitscode (DCVV4) übereinstimmt, und
- das Senden (C42) von einer positiven Authentifizierungsnachricht (M2) an den Zugangsserver (3000), wenn
o der zweite Zugangscode (CD2) mit dem ersten gespeicherten Zugangscode (CD1) übereinstimmt und
o der erste dynamische Sicherheitscode (DCVV3) gültig ist.

14. Computerprogramm (PG2 ; PG3), das Anweisungen für das Ausführen der Schritte eines Verfahrens nach Anspruch 13 aufweist, wenn das Programm von einem Computer ausgeführt wird.

15. Computerlesbares Aufzeichnungsmedium (M1), auf dem ein Computerprogramm (PG2 ; PG3) aufgezeichnet ist, das Anweisungen für das Ausführen der Schritte eines Verfahrens nach Anspruch 13 aufweist.

## Claims

1. An authentication server (5000) comprising:
- a communication module (5200) suitable to send, to a remote server (6000), a bank identifier of the PAN type associated with a bank card (1000), said communication module (5200) being suitable, in response to said sent PAN identifier, to receive, from the remote server (6000), a first access code (CD1) in order to access a service (S1);
- a recording module (5300) suitable to record, in a memory, the bank identifier PAN of the bank card (1000), in association with an expiration date (EXP) of the bank card and the first access code (CD1) to a service (S1);
the communication module (5200) being suitable to receive an authentication request coming from an access server (3000) controlling the access to said service (S1), said request comprising a second access code (CD2) and a first dynamic security code (DCVV3) generated by the bank card (1000);
the authentication server further comprising:
- a verification module (5400) configured to generate a second dynamic security code (DCVV4) from the bank identifier PAN and the expiration date (EXP) that are recorded in said memory, in order to compare the first and second dynamic security codes, and to detect that the first dynamic security code (DCVV3) is valid only if it coincides with the second dynamic security code (DCVV4); and
- said communication module (5200) being configured to send the access server (3000) a positive authentication message (M2) only if:
∘ the second access code (CD2) coincides with the recorded first access code (CD1); and
∘ the first dynamic security code (DCVV3) is valid.

2. The authentication server according to claim 1, wherein the first dynamic security code (DCVV3) received by the communication module (5200) in the authentication request is generated by the bank card (1000) by executing a cryptographic function from the bank identifier PAN and the expiration date (EXP), and from a temporal datum or a counter of the number of first dynamic security codes (DCVV3).

3. The authentication server according to claim 2, wherein the verification module (5400) is configured to generate the second dynamic security code (DCVV4) by executing the cryptographic function from said bank identifier PAN and the expiration date (EXP) recorded in said memory and from a temporal datum or a counter of the number of second dynamic security codes (DCVV4).

4. The authentication server according to any one of claims 1 to 3, wherein the communication module (5200) is suitable to receive, in bank transaction data (DT1), the identifier PAN to be transmitted to said remote server (6000).

5. The authentication server according to claim 4, wherein the communication module (5200) is suitable to receive the bank transaction data (DT1) from the access server (3000).

6. The authentication server according to claim 4 or 5, wherein:
- the bank transaction data (DT1) include a third dynamic security code (DCCV1) generated by said bank card (1000), the bank identifier PAN and the expiration date (EXP);
- the verification module (5400) is suitable to verify the validity of the third dynamic security code (DCVV1);
- said communication module (5200) being configured to send the remote server (6000), only if the validity verification of the third dynamic security code (DCVV1) is passed successfully, the identifier PAN and the message (M1) indicating that said third dynamic security code (DCVV1) is valid; and
- said communication module (5200) being suitable to receive from the remote server (6000), in response to the identifier and said sent message (M1), said first access code (CD1) to be recorded by the recording module (5300).

7. The authentication server according to the combination of claims 2, 3 and 6, wherein:
- the third dynamic security code (DCVV1) is generated by the bank card (1000) from the identifier PAN and the expiration date (EXP) of the bank card (100), and from a temporal datum or the counter of the number of first dynamic security codes (DCVV3);
- the verification module (5400) is configured to generate a fourth dynamic security code (DCVV2) from the identifier PAN and the expiration date (EXP) of the bank card (100), and from a temporal datum or the counter of the number of second dynamic security codes (DCVV4), in order to compare the third and fourth dynamic security codes, and to detect that the third dynamic security code (DCVV1) is valid only if said third dynamic security code (DCVV1) coincides with the fourth dynamic security code (DCW2).

8. The authentication server according to any one of claims 1 to 7, wherein the recording module (5300) is configured to record an identifier (IDS1) of the service (S1) in association with the identifier PAN, the expiration date (EXP) and the first access code (CD1) such that the verification module (5400) is suitable to determine the first access code (CD1) associated with said service (S1).

9. The authentication server according to any one of claims 1 to 8, wherein the recording module (5300) is configured to record the first access code (CD1) in said memory in association with a plurality of services.

10. The authentication server according to any one of claims 1 to 9, wherein:
- the recording module (5300) is configured to record a temporal condition in association with the identifier PAN, the expiration date (EXP) and the first access code (CD1),
- the verification module (5400) being configured to determine that the first access code (CD1) is valid as long as the temporal condition is satisfied.

11. The authentication server (5000) according to any one of claims 1 to 10, wherein the communication module is configured to send the access server (3000) a negative authentication message, if the second access code (CD2) does not coincide with the recorded first access code (CD1) or if the first dynamic security code (DCVV3) is not valid.

12. A system (SY) for controlling access to a service (S1) comprising:
- an authentication server (5000) according to any one of claims 1 to 11; and
- an access server (3000) suitable to control the access to said service (S1), said access server being configured to authorize the access to said service for a user associated with said identifier PAN, only upon receiving the positive authentication message from the authentication server.

13. An authentication method implemented by an authentication server (5000), comprising:
- sending (C14), to a remote server (6000), a bank identifier PAN associated with a bank card (1000);
- receiving (C18), in response to said transmission (C14), a first access code (CD1) in order to access a service (S1);
- recording (C20) the identifier PAN in association with the first access code (CD1);
- receiving (C32) an authentication request (RQ) coming from an access server (3000) controlling the access to said service (S1), said request comprising a second access code (CD2) and a first dynamic security code (DCVV3) generated by the bank card (1000) while executing a cryptographic function from a temporal datum;
- verifying (C34) the validity of the first dynamic security code (DCVV3), said verification comprising generating (C36) a second dynamic security code (DCVV4) while executing said cryptographic function from a temporal datum and from said recorded identifier PAN, comparing (C38) the first and second dynamic security codes, and detecting (C34) that the first dynamic security code (DCVV3) is valid only if it coincides with the second dynamic security code (DCVV4); and
- sending (C42) the access server (3000) a positive authentication message (M2) only if:
∘ the second access code (CD2) coincides with the recorded first access code (CD1); and
∘ the first dynamic security code (DCVV3) is valid.

14. A computer program (PG2; PG3) including instructions for executing steps of a method according to claim 13 when said program is executed by a computer.

15. A recording medium (M1) readable by a computer on which a computer program (PG2; PG3) is stored comprising instructions for executing steps of a method according to claim 13.
